# EUROPEAN PATENT APPLICATION

(11) **EP 2 581 776 A1**
(43) Date of publication of application: **17.04.2013**
(21) Application number: 11185077.2
(22) Date of filing: 13.10.2011
(51) Int. Cl.: G02B 6/42

(54) **Optical connector with alignment element, optical unit and assembly method**

(71) Applicant: Tyco Electronics Svenska Holdings AB, 17526 Järfälla (SE)
(72) Inventor: Steijer, Odd, 16868 Bromma (SE); Andersson, Magnus, 17771 Järfälla (SE)
(74) Representative: Grünecker, Kinkeldey, Stockmair & Schwanhäusser

(57) **Abstract**

The present invention relates to an optical connector for connecting at least one light source and/or light receiver to at least one optical component. The present invention further relates to an optical unit comprising a circuit carrier with a light source and/or light receiver and such an optical connector, and also relates to a method for assembling such an optical unit. An optical connector for connecting at least one light source (106) and/or light receiver to at least one optical component comprises a connector body (102) comprising at least one first light path (104), and an alignment element for facilitating the alignment of said connector (100) with respect to said light source (106) and/or light receiver. The alignment element comprises at least one second light path (114) for imaging a fiducial (118) which is correlated to a position of said light source (106) and/or light receiver.

## Description

The present invention relates to an optical connector for connecting at least one light source and/or light receiver to at least one optical component. The present invention further relates to an optical unit comprising a circuit carrier with a light source and/or light receiver and such an optical connector, and also relates to a method for assembling such an optical unit.

In the field of optical data transmission, there exists a significant interest in the development of higher band width fiber optic interconnects for a variety of server and storage applications. For example, optical transmitter arrays comprising vertical cavity surface emitting lasers (VCSEL) are commercially available with up to twelve lasers per array on a 250 micron pitch. These devices are to be interconnected with similar arrays of photodetectors, e. g. using ribbons of optical fibers to form parallel optical interconnects. Such devices may be used, for example, on high-end technical computers as part of the clustering fabric between switches, which enables higher band width and longer distance links essential to building large server clusters. Smaller versions of parallel optical interconnects with, for instance, four optical elements per array are also used in high volumes for I/O applications and other uses are being developed for future clustering applications of this technology. Various widths of parallel optical interconnects have been standardized, including 4x, 8x and 12x arrays of data rates ranging from 2.5 Gigabit per second per line, to 5 Gigabit per second per line. More advanced applications are also under consideration, including direct integration of VCSEL arrays into dual chip and multichip modules.

Parallel optical interconnects offer many technical advantages, including significantly higher band widths and many times the distance of copper links, immunity to electromagnetic interference, smaller and denser packaging, and lighter weight, more flexible cable assemblies. A significant inhibitor to the wider adoption of these links has been the relatively high cost compared to copper alternatives. Consequently, parallel optical interconnects are only used today in applications which are either insensitive to costs or which require a combination of distance and bandwidth that cannot be achieved any other way. Cost reductions for parallel optical interconnects would thus be highly desirable.

A major cost component is the alignment required between an array of lasers and a corresponding array of optical fibers. The goal is to launch infra-red radiation (typical wavelengths near 850 nm) from the VCSEL aperture (initially approximately 10 microns diameter) into the fibre core (typically 50 microns diameter) as efficiently as possible with the lowest cost. Positioning the fiber core directly against the laser aperture, i. e. butt coupling, is not practical because the laser beam from a VCSEL has a very high divergence. For this reason, conventional VCSEL arrays employ some sort of lens structure to facilitate coupling light into the fiber array. The alignment of these lenses for coupling light to fibers or waveguides is therefore one of the challenges for cost-effective manufacturing of fiber optic modules.

The required alignment tolerances are lower for multimode fiber applications than for single mode fiber applications, mainly due to larger fiber core diameters for the former. However, the increasing transmission speed for multimode applications tends to increase the requirements on accuracy for multimode alignment schemes. On the transmitter side, VCSEL mode-hopping during modulation together with mode-selective coupling to the fiber creates unwanted phase and amplitude jitter, which deteriorates the HF performance. On the receiver's side, speckle noise caused by fiber modal interference combined with core coupling to the detector results in jitter. Both effects can be suppressed by high quality and stable coupling between the VCSEL and the multimode fiber.

The present invention aims at improving the coupling issue for multimode components, but may of course also be applied to any application where a precise alignment between an optical light source and a second optical component is required.

Typically, on the transmitter side, a total mismatch between fiber core center position and VCSEL image position of not more than 10 micron is tolerable. Due to the small diameter of the detector (usually a positive/intrinsic/negative diode, PIN) which is necessary at high speed transmission, the requirement regarding the alignment on the receiver's side is also roughly 10 µm. The total misalignment consists of a number of separate contributions. For example, the misalignments between light emitter (VCSEL) and a first lens, between the first lens and the second lens, between the second lens and a guiding structure on the lens, e.g. a guide-pin, between the image and the fiber core center, between the fiber core center and a guiding structure on the fiber ferrule, e.g. a guide hole. Furthermore, also the optical system itself, like the impact due to the lens magnification has to be taken into consideration. Furthermore, working with array components, adds still more complexity, since all six degrees of freedom (x, y, z, roll, pitch and yaw) have to be considered.

Known concepts use at least four basic principles to align lenses with respect to active optical components. Firstly, an active alignment can be performed by optimizing the lens position by measuring fiber coupled light using a feed-back signal. Secondly, passive means can be used for mechanically guiding and placing the lens in a predetermined position. Pattern matching uses fiducial marks on piece parts forming a matching overlay image, compared to a mask alignment when the lens is accurately positioned. Finally, dead-reckoning can be used for aligning the lenses by identifying structures on piece parts, appointing their relative position in a common coordinate system, and performing a subsequent high-precision placement.

US 6,845,120 B2 relates to a laser array, wherein a transparent lens array is aligned with an optical assemblage containing the lasers by means of fiducials that are formed on the underside of the lens array and are to be viewed through high precision through-holes.

However, in contrast to the present invention, the alignment according to this known method feeds light from the opposite side into the lens array and further into the laser array and needs an inspection from the back side of the laser array. Furthermore, it does not align with respect to an additional substrate where the laser die might be attached to as this is done according to the present invention.

Another alignment technique which uses additional lens paths for guiding the light from a fiducial through a lens array is shown in US patent 7,589,898 B2. This document discloses a lens sheet for a display device which uses particular flat parts on the lens array for imaging the fiducial marks on the upper side of the lens array..

US patent 7,612,881 B2 relates to a method for high precision alignment of a surface emitting laser and a lens in an optical module in which optical coupling between a surface emitting laser and other optical devices such as an optical fiber is realized via lenses, and a structure for providing the method. A lens member, in which the lenses are arrayed at a depth t 1 from a reference plane and an alignment mark is provided at a depth t 2 (t 1 < t 2) is prepared. Then alignment is performed for the lens and the surface emitting laser 106 mounted on the board for a photonic device.

An active alignment technique of a fiber connector and a laser emitter are disclosed in US patent application 2005/0117853 A1.

A mechanical solution with guide pins is shown in US 2002/00941745 A1.

A flip chip mounting technique using a transparent carrier for the optoelectric chips is shown in US 7,539,366 B1.

A fiducial supported alignment technique of a micro lens array to a VCSEL wafer is shown in US 2010/0265507 A1. However, here the alignment is done on a wafer level, that is, a wafer of laser chips is connected to a wafer of micro lenses and these are aligned to each other. No optical modules which might be connected to fiber optics can be contacted by means of this technique.

Two systems of optical connectors which are based on a merely mechanical solution are shown in US patents 7,234,874 B2 and US 6,056,488. However, no fiducials are used in these alignment procedures.

All known methods have pros and cons, making them more or less suitable for different situations, but all have significant drawbacks.

The object underlying the present invention is to provide an improved alignment technique for a connector between a light source and a further optical component.

Further, it is an object of this invention to enable printed circuit board and wafer-scale manufacturing as well as electronic integration with optical components.

The present application makes use of the principle of pattern-matching for array-type lenses in order to achieve a particularly accurate and cost-effective alignment between a light source and a optical connection.

In particular, the present invention is applied to array-type lenses having two lens elements in the ray path, one collimating and one focusing.

According to the present invention, an optical connector for connecting at least one light source to at least one optical component comprises a connector body having at least one first light path. An alignment element for facilitating the alignment of the connector with respect to the light source comprises at least one second light path for imaging a fiducial marking a position of the light source. This additional light path-which also will be referred to as light channel in the following-allows for a particularly simple and accurate alignment of the optical connector with respect to the light source. In particular, when mounting the connector on a circuit carrier whereto the light source is attached, accurate semiconductor fabrication techniques can be used for providing the fiducial on the circuit carrier and defining the position of the light source with respect to this fiducial.

By providing lenses in the light path, the diverging radiation, for instance emitted by a VCSEL, can be focused into the light channel. A second lens may be provided at the other end of the connector for bundling the radiation directly into a further optical component, such as a waveguide or fiber. The alignment light path is integrated into the same connector body in a way that the image of a fiducial is shown on an observation surface of the connector body which is different from the surface which is directly opposing the light source. Thus, the alignment may conveniently be performed from a surface which is accessible to a mounting robot. In particular, the observation surface may comprise a reference structure, which interacts with the image of the fiducial for indicating a correct positioning of the optical connector.

For instance, when using a lens array with twelve channels including a reflector to tilt the light path by 90 degrees from the device side to the fiber side, the present invention can be applied advantageously. On the fiber side, guide pins can be provided for interfacing to a standard mechanical transfer (MT)-type fiber ferrule, as this is established technology. By providing two alignment light paths, each having an extra lens element on the device side, and by providing two corresponding reference structures on the fiber side, a pattern-matching alignment with the help of accordingly-provided fiducials can be performed. Such an approach relaxes the requirement on the total tolerance of the optical connector, since the relative tolerance between features such as lenses, structures and pins on the same common side of the lens is far better than the absolute tolerance between features on opposite sides. This is a consequence of the moulding process of the optical connector. By using two outer channels for alignment, the inner twelve channels are automatically aligned.

The optical connector according to the present invention may be fixed by means of a UV or heat-curable adhesive after the position has been aligned according to the present invention.

According to an advantageous embodiment of the present invention, a transparent circuit carrier is used which allows to mount the light source and the connector on two opposing sides of the carrier, the light source sending its light through the carrier into the connector. When a transparent carrier is used, a backlight illumination can be utilized for backlighting the fiducial. Furthermore, the step of UV curing an adhesive is facilitated by using a transparent carrier. With a transparent carrier, also the fiducial can be fabricated on the surface opposing the connector. This has the advantage of a still better correlation between the position of the fiducial and the position of the light source and, furthermore, has the advantage that the fiducial as an object to be imaged has the same distance from the connector as the light source.

The invention will be described hereinafter in more detail and in an exemplary manner using advantageous embodiments and with reference to the drawings. The described embodiments are only possible configurations in which, however, the individual features as described above can be provided independent of one another and can be omitted in the drawings, wherein
- **Fig. 1**: is a schematic representation of a first light path leading from a light source to an optical fiber;
- **Fig. 2**: is a schematic representation of an alignment light path leading from a fiducial to a reference structure in a connector body;
- **Fig. 3**: is a schematic side view of a connector body according to a first embodiment;
- **Fig. 4**: is a perspective view of a connector according to a second embodiment;
- **Fig. 5**: is a further perspective view of the connector of Fig. 4;
- **Fig. 6**: is a schematic representation of a circuit carrier with a light source and other electric components mounted thereon;
- **Fig. 7**: is a detail of Fig. 6;
- **Fig. 8**: is an exploded view of an optical unit according to the present invention;
- **Fig.9**: is a perspective representation of a connector according to a second embodiment;
- **Fig. 10**: is a further perspective view of the connector according to Fig. 9;
- **Fig. 11**: is a side-view of the connector of Fig. 9;
- **Fig. 12**: is a sectional view of the optical unit along a cutting line indicated in Fig. 11;
- **Fig. 13**: is a sectional view of the optical unit along another cutting line indicated in Fig. 11.

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout. Prime, double-prime and triple-prime notations are used to indicate similar elements in alternate embodiments.

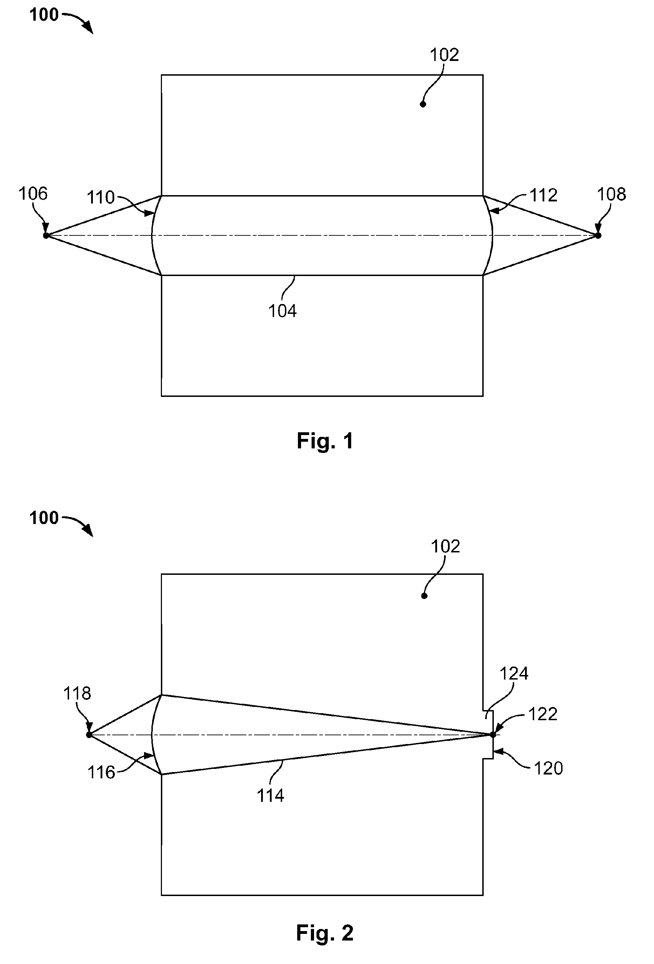

Referring to Fig. 1, a light path between a light source and a further optical component, such as an optical waveguide or optical fiber, through the connector according to the present invention, is shown.

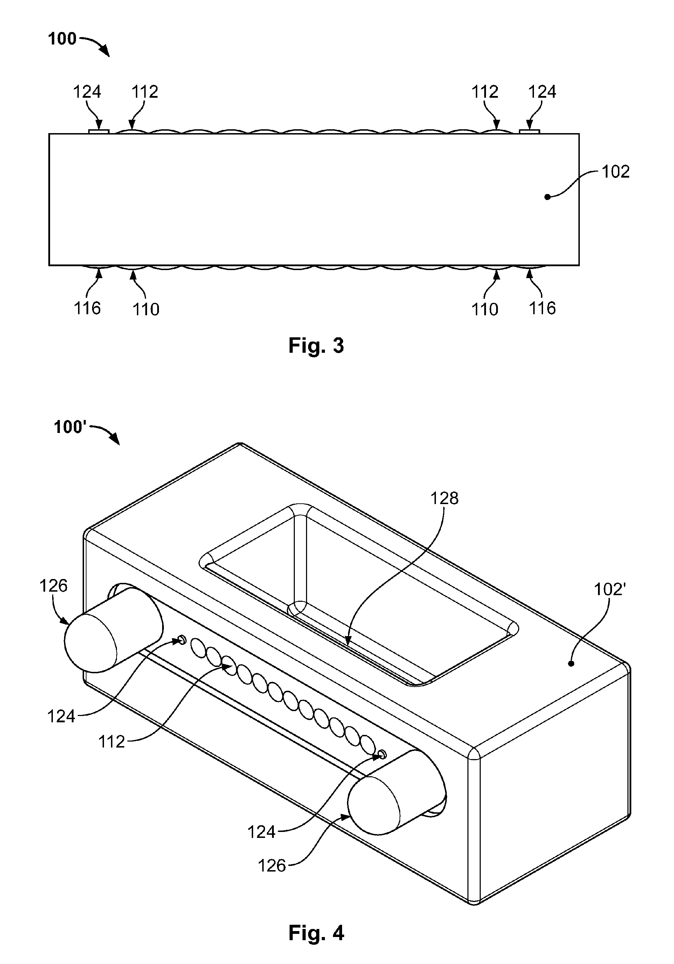

The optical connector 100 according to the present invention has a connector body 102, wherein a plurality of first light paths 104 are provided. The first light path 104 leads from a light source 106, for instance a VCSEL, to a predefined coupling point 108, for instance in the center of an optical wave guide. A first lens 110 is used for collimating the light emitted by the light source 106. Of course, also a focusing lens can be used here, if needed. At the other end of the light channel 104, a focusing lens 112 is provided for focusing the radiation to the coupling point 108. The optical connection 100 comprises a plurality of such first light paths 104, for instance twelve, as shown in Fig. 3.

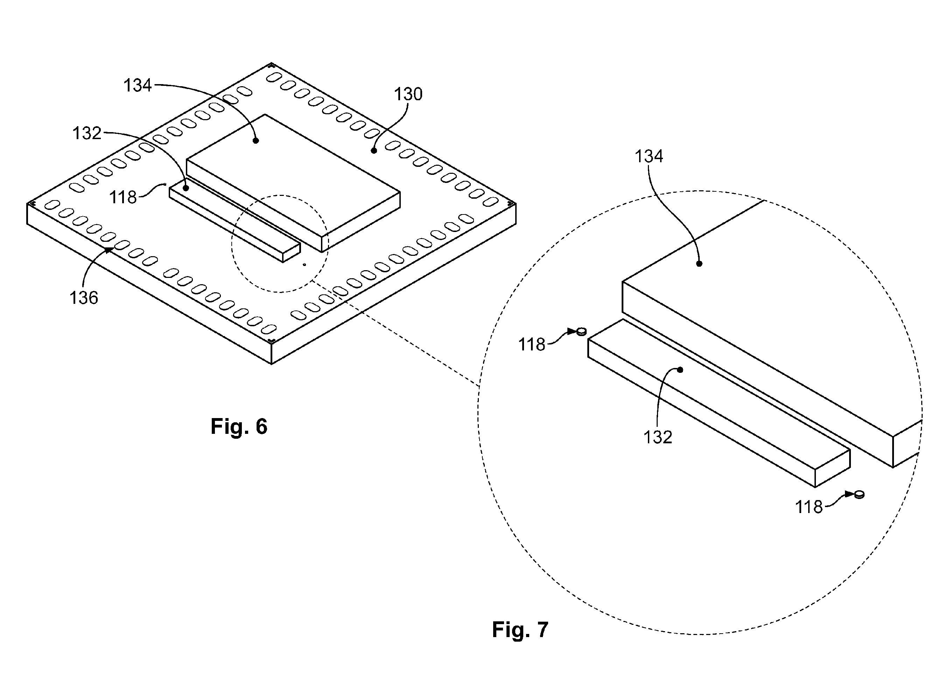

According to the present invention, the connector body 102 further comprises additional second light paths 114 which are used for the alignment of the connector 100 with respect to a position of a light source. In contrast to the first light path, the second alignment light path 114 has an alignment lens 116 which is formed to image a fiducial (shown in Fig. 6) onto a predetermined observation surface 120. The image 122 of the fiducial is visible on a surface different from the surface opposing to the light source 106 and the position of the image 122 within a particular reference structure 124 is used for assessing whether the connector 100 is properly aligned with respect to the fiducial. Thus, the image position is at the surface of the connector body on the specific reference structure 124, an optical flat. This is essential, since the optical flat can be viewed in the same optical plane as the image. Such a viewing of a fiducial cannot be realized with one of the inner channels 104, even if the lens elements could be used as reference structures, because the image would not lie in the same plane. The distance between the lens surface and the image plane as shown in Fig. 1, is typically around 500 µm.

In Fig. 3, a schematic side-view of a 12-channel optical connector 100 is shown, having 12 inner channels 104 for communication, and two outer channels 114 for the alignment. This design allows for an accurate alignment on a circuit carrier that is provided with two fiducials as this will be explained in more detail with respect to Figs. 6 and 7.

Fig. 4 shows a second example of an optical connector 100' for connecting a mating connector with optical waveguides (not shown in the figures) to a light source, such as a VCSEL. In addition to the first embodiment, the optical connector 100' comprises two standard alignment pins 126 for being connected with a mating connector.

These so-called MT (mechanical transfer) ferrules are standard connectors which are fabricated in a well-established high precision moulding process. Further, the connector 100' is additionally provided with a reflector 128 for providing a 90 degree tilt of the wave path. According to the present invention, the connector 100' is mounted to a circuit carrier with its underside of Fig. 4. Focusing lenses 112 are arranged in a way that they focus light entering from the underside to a connected mating connector (not shown in the figures). According to the present invention, the optical connector 100' has two reference structures 124 which are arranged at both sides of the lens array necessary for communication. When mounting the optical connector 100' on a circuit board, two corresponding fiducials are provided thereon and the image of the two fiducials can be observed in the center of the reference structures 124 if the connector is correctly aligned with respect to the fiducials. By ensuring that the light source array is accurately aligned with the fiducials, as this will be explained in more detail with reference to Figs. 6 to 8, the lens array of the connector is aligned to the light source array mounted on the circuit carrier.

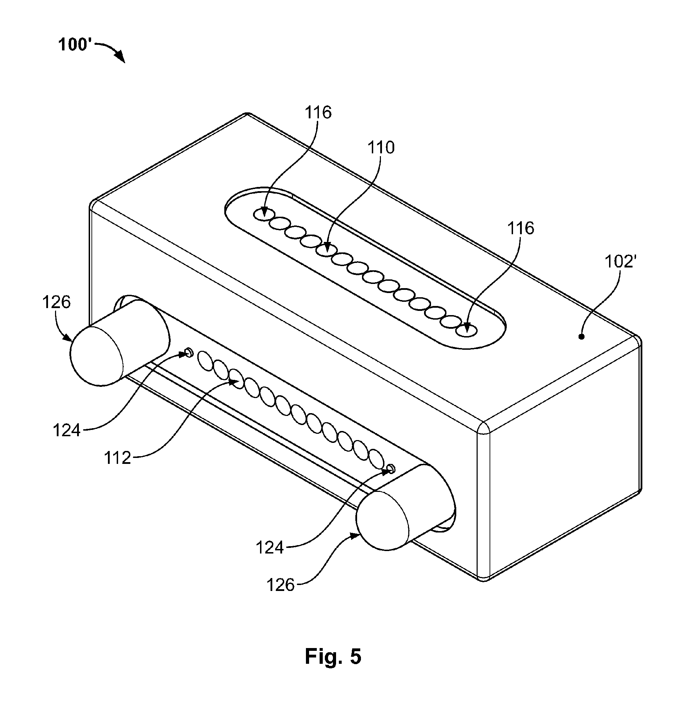

Fig. 5 shows a perspective view of the connector 100' of Fig. 4 turned by 180 degrees, so that the side of the connector which is in contact with the circuit carrier and where the light of the light source enters is visible. Due to the reflector 128, the lenses of the first light paths 110 and the focusing lenses 112 as well as the alignment lenses 116 and the references structures 124 are arranged on two surfaces of the connector 100' which are extending across to each other. This allows a facilitated alignment and later contacting of a mating MT connector.

The belonging circuit carrier 130 is shown in Fig. 6, and a detail thereof in Fig. 7. According to the present invention, the circuit carrier 130 is made from a transparent material, such as glass, quartz or a plastic material. On one surface, a semiconductor component comprising a plurality of light sources, VCSEL, is mounted thereto together with an integrated circuit 134. The light source component 132 is operable to transmit light through the circuit carrier 130. Electrical contact to the outside may be established via electrical connections 136. The light source component 132-which also may be referred to as optical die-and two fiducials 118 are provided on the same surface of the transparent circuit carrier 130, thus enhancing the accuracy of their relative position. The optical die 132 may for instance be attached to the transparent carrier 130 by self-alignment at solder bump reflow. The alignment features for the optical die 132 and the lens alignment marks 118 are lithographically defined, and therefore their relative position is very accurate, typically within one micron. Alternatively, the optical die 132 itself could be extended to contain the lens alignment marks 118. In any case, the distance between the fiducials 118 and the alignment lenses 116 interacts with the particular form of the alignment lens to ensure that a focused image of the fiducial can be seen on the reference structure 124.

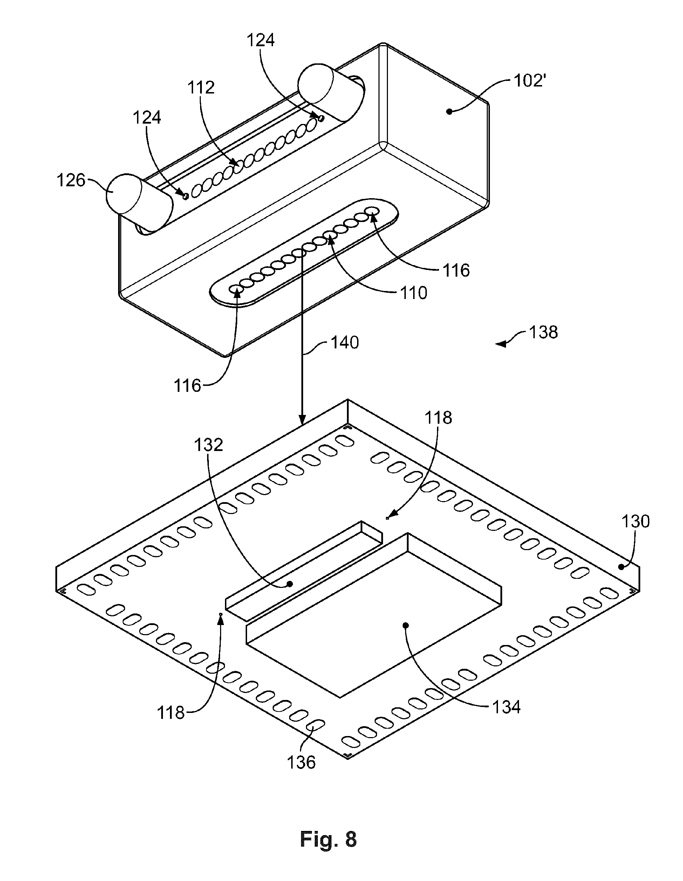

Fig. 8 shows an exploded view of an optical unit 138 according to the present invention. The connector body 102 is fitted in a direction 140 onto a first surface of a transparent carrier 130. On the opposing surface of the transparent carrier the optical die 132 and optionally integrated circuitry 134 is provided together with the fiducials 118. The image of the fiducials 118 are focused by means of lenses 116 and reflected by means of the reflector 128 (not visible in this figure) so that they can be seen as focused images on the reference structures 124, provided that the connector 102' is accurately aligned with respect to the fiducials 118.

The visibility of the fiducials 118 can easily be ensured by providing a front illumination and/or backlight and by performing the alignment process using an optical system, such as a microscope. When the optical connector has been satisfactorily aligned, its position can be fixed to the carrier 130 for instance by using a UV curing adhesive.

As the reference structures 124 are arranged on the same side of the optical connector 100 as the out-coupling focusing lenses 112, an assembly process for the optical unit 138 cannot be done in a batch process on wafer level.

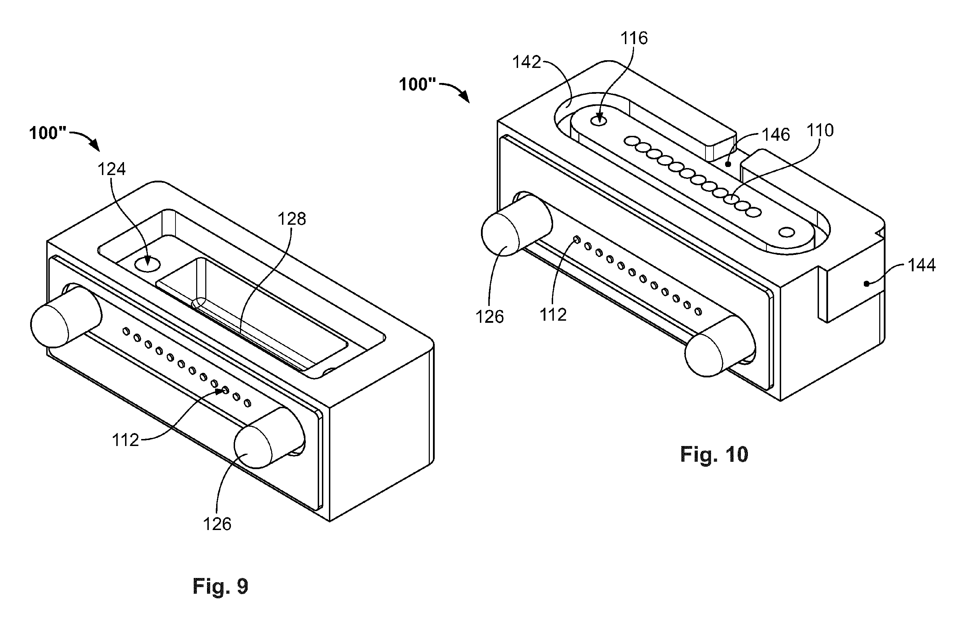

This disadvantage can be overcome by using an optical connector 100" according to a further improved embodiment which will be explained in the following with reference to Figs. 9 and 10.

The optical connector 100" is intended to be mounted on circuit carriers 130 identical to those shown in Figs. 6 to 8. In contrast to the second embodiment, however, the optical connector 100" has a reflector 128 that does only tilt the light paths of the communication channels, but not the alignment light paths. Thus, the reference structures 124 are provided on the surface directly opposing the circuit carrier and extending across to the surface carrying the focusing lenses 112. Hence, the alignment procedure can also be performed in a batch process with a plurality of not yet separated circuit carriers 130 because the fiducials are visible from above. Further, the optical connector 100" is provided with a groove 142 to prevent the adhesive from protruding into the lens elements and thereby contaminating them. An inlet 144 is provided for fabricating the lens array. For avoiding that water condenses in a semi-hermetic cavity, an air vent 146 is provided at the groove 142.

The fiducials corresponding to the optical connector 100" are not necessarily the same pair of fiducials as described earlier, since they are located in a different position. The function of the vertical alignment feature is two-fold. It could of course be used for alignment, but also for a top-side monitoring. For instance at batch processing, using a high precision pick and place equipment, these features could be used to continuously check equipment precision and/or repeatability in-situ.

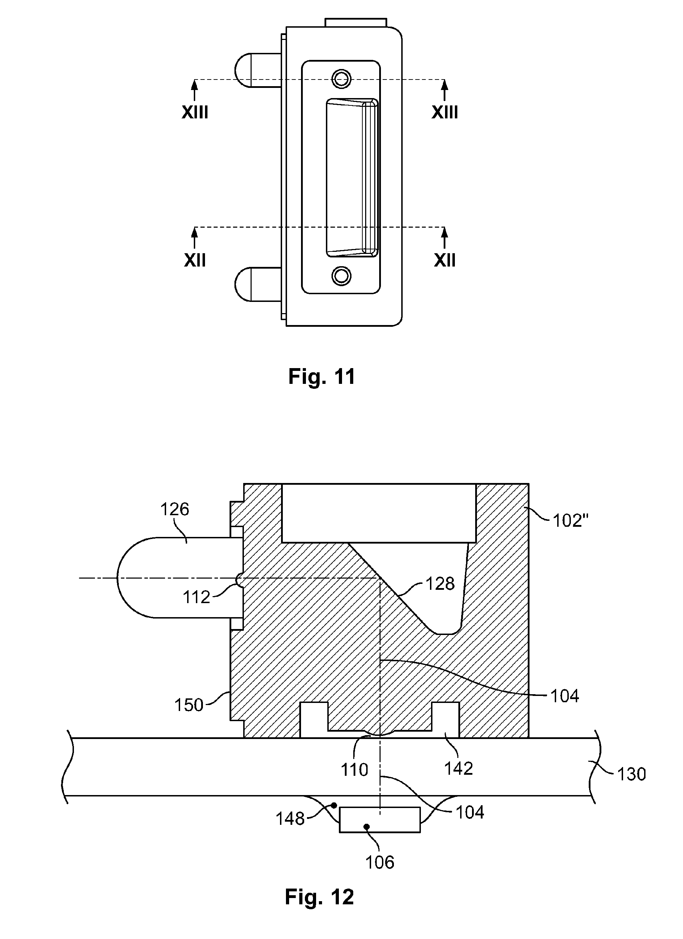

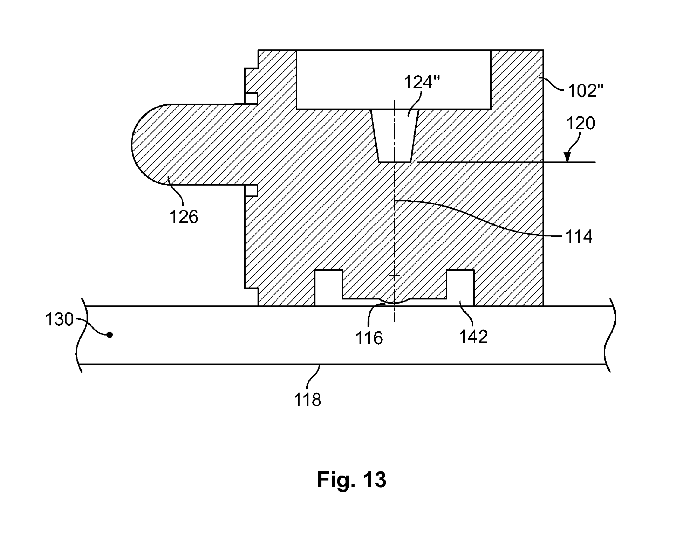

The two sectional views of the optical connector 100" of Fig. 11 as shown in Figs. 12 and 13, illustrate the different light paths of the regular communication channel and the alignment channel, respectively. For the regular light path, as shown in Fig. 12, the VCSEL 106 which is mounted by means of a transparent underfill to a transparent circuit carrier 130 is collimated by means of the lens 110, then reflected at the reflector 128, and finally coupled to the outside via the focusing lens 112. A well-defined surface 150 serves as an MT ferrule hard stop. The alignment pins 126 ensure the alignment of the MT ferrule in the remaining dimensions. The transparent circuit carrier 130 may, for instance, be formed from glass.

In contrast to the regular light path during operation, on each side of the row of lenses 112 and 110, respectively, an alignment light path 114 is provided which extends in a straight line from the circuit carrier to the upper side of the optical connector 100" which stays accessible when the connector is attached to the circuit carrier 130. The reference structure 124 according to this embodiment may be realized by a recess that has a defined distance from the alignment lens 116 to show a focused image of the fiducial on the back side of the carrier 130. The image plane is symbolized with reference numeral 120; the exact position of the image plane 120 of course depends on the form of the lens 116 and may, depending on the size of the optical connector, be either a well or a projecting reference structure 124. Some sort of front light and/or backlight projects the image of the fiducial 118 onto the image plane 120.

Although in the above explained embodiments always an alignment with respect to a light source, e. g. VCSEL, has been described, the principles according to the present invention can of course also be employed for an alignment of a connector with respect to a photo detector, e. g. positive/intrinsic/negative diode, PIN, which is mounted on a carrier in the same way as the light source described above.

In summary, the optical connector, optical unit and assembly method according to the present invention, provide an improved alignment of a connector that is to be mated with a further optical component with respect to a light source such as a VCSEL optical die. According to a particular embodiment, this technique is even usable for batch processes and automated alignment procedures.

### REFERENCES NUMERALS

| | |
|---|---|
| 100, 100', 100" | Optical connector |
| 102, 102' | Connector body |
| 104 | First light path |
| 106 | Light source |
| 108 | Coupling point |
| 110 | Collimating lens |
| 112 | Focusing lens |
| 114 | Second light path for alignment |
| 116 | Alignment lens |
| 118 | Fiducial |
| 120 | Image plane/observation surface |
| 122 | Image of the fiducial |
| 124 | Reference structure |
| 126 | Alignment pins |
| 128 | Reflector |
| 130 | Circuit carrier |
| 132 | Light source component (optical die) |
| 134 | Integrated circuit |
| 136 | Electrical connections |
| 138 | Optical unit |
| 140 | Mounting direction |
| 142 | Groove |
| 144 | Inlet |
| 146 | Air vent |
| 148 | Transparent underfill for optical die |
| 150 | Hard stop for MT ferrule |

## Claims

1. Optical connector for connecting at least one light source (106) and/or light receiver to at least one optical component, said optical connector (100) comprising:
a connector body (102) comprising at least one first light path (104);
an alignment element for facilitating the alignment of said connector (100) with respect to said light source (106) and/or light receiver,
wherein said alignment element comprises at least one second light path (114) for imaging a fiducial (118) which is correlated to a position of said light source (106) and/or light receiver.

2. Optical connector according to claim 1, wherein said connector (100) is adapted to be mounted on a circuit carrier (130) whereto the light source (106) and/or light receiver is attached.

3. Optical connector according to claim 1 or 2, wherein said at least one first light path (104) comprises a first lens (110) arranged for collimating the light emitted by said light source (106) into said at least one first light path.

4. Optical connector according to one of the preceding claims, wherein said at least one second light path (114) comprises an alignment lens (116) for focussing an image of said fiducial on an outer observation surface (120) of the connector body which is different from the surface opposing said light source (106) and/or light receiver.

5. Optical connector according to one of the preceding claims, wherein said observation surface comprises a reference structure (124) which interacts with the image of the fiducial (118) for indicating a correct positioning of the optical connector (100).

6. Optical connector according to one of the preceding claims, wherein for aligning a mating connector attached to said at least one optical component, mechanical alignment means (126) are provided at the connector body (102).

7. Optical connector according to one of the preceding claims, wherein a plurality of first light paths (104) is arranged to form a micro lens array for focussing the light emitted by an array of vertical cavity surface emitting lasers, VCSEL, (106) to be coupled into a plurality of optical wave guides.

8. Optical unit comprising a circuit carrier (130) with at least one light source (106) and/or light receiver and an optical connector (100) according to one of the preceding claims being mounted thereon.

9. Optical unit according to claim 8, wherein said circuit carrier (130) is fabricated from a transparent material.

10. Optical unit according to claim 8 or 9, wherein said light source (106) and/or light receiver and said optical connector (100) are attached to opposing surfaces of said circuit carrier.

11. Optical unit according to one of the claims 8 to 10, wherein said optical connector (100) is adapted to be connected to a mating connector whereto there is attached at least one optical wave guide.

12. Method for assembling an optical unit, comprising the steps of:
fabricating a circuit carrier and providing same with at least one fiducial;
mounting a light source and/or light receiver on said circuit carrier, the light source and/or light receiver having a predefined position with respect to said fiducial;
aligning an optical connector for connecting said at least one light source and/or light receiver to at least one optical component by means of said fiducial, wherein the image of the fiducial is visible on an outer observation surface of the optical connector which is different from the surface opposing said circuit carrier;
fixing said connector in the aligned position.

13. Method according to claim 12, wherein said step of fixing the optical connector comprising applying a UV or heat curable adhesive and curing same by exposure to UV radiation or heat.

14. Method according to claim 12 or 13, wherein the step of aligning the optical connector for connecting said at least one light source and/or light receiver to at least one optical component by means of said fiducial comprises centring the image of the fiducial within a reference structure provided on the observation surface.

15. Method according to one of the claims 12 to 14, wherein said circuit carrier is fabricated from a transparent material.

16. Method according to one of the claims 12 to 15, wherein the connector is mounted on a surface of said circuit carrier which is opposite to the surface whereto the light source and/or light receiver is mounted.

17. Method according to one of the claims 12 to 16, wherein said light source comprises at least one vertical cavity surface emitting laser, VCSEL.
